Europäisches Patentamt

European Patent Office

Office européen des brevets

(11) Publication number: **0 196 729**
**B1**

# EUROPEAN PATENT SPECIFICATION

(45) Date of publication of patent specification: **16.08.89**

(51) Int. Cl.⁴: **A 01 B 15/10,** A 01 B 61/04

(21) Application number: **86200551.9**

(22) Date of filing: **02.04.86**

(54) **A plough.**

(30) Priority: **04.04.85 NL 8500997**
**04.04.85 NL 8500996**

(43) Date of publication of application:
**08.10.86 Bulletin 86/41**

(45) Publication of the grant of the patent:
**16.08.89 Bulletin 89/33**

(84) Designated Contracting States:
**DE FR GB NL**

(56) References cited:
**DE-C- 96 751**
**DE-C- 459 280**
**FR-A-2 090 170**
**FR-A-2 301 165**
**FR-E- 34 469**
**GB-A-1 040 475**
**GB-A-1 352 644**
**GB-A-2 065 432**
**US-A-2 079 531**
**US-A-2 326 097**
**US-A-4 319 645**

(73) Proprietor: **C. van der Lely N.V.**
**Weverskade 10 P.O. Box 26**
**NL-3155 ZG Maasland (NL)**

(72) Inventor: **Van der Lely, Cornelis**
**7, Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

## Description

The invention relates to a plough comprising a frame and at least one plough body connected to this frame, the plough body including a mouldboard comprising at least two portions that are arranged one above the other and pivotably relative to each other.

With ploughs of this kind (DE—C—459280) the shape of the mouldboard can be modified such that the plough body can be used for a plurality of soil types. However, the total surface along which, during operation, a slice of soil is guided remains the same, so that no maximum effect can be achieved for every type of soil. The invention has for its object to provide a plough of the kind set forth whereby the total surface for guiding a slice of soil along the mouldboard can be modified also.

In accordance with the invention there is provided a plough of the kind set forth, wherein the lower portion of the mouldboard has an extension arranged adjustably around an upwardly extending shaft and, for the object of adjusting the respective portions of the mouldboard, an adjusting mechanism is provided which includes an upwardly extending shaft connected to a plough body carrying arm and in that the adjusting mechanism includes a first arm which is disposed on the shaft and is swivelably connected to the said extension and that the shaft also includes another arm which is hingedly connected to the swivelable lower portion of the mouldboard, a third arm for adjusting the upper mouldboard portion being connected with the first arm, all this such that, when the mouldboard portions are swivelled in one direction, the extension is swivelled in the opposite direction. By means of this construction, with the adjustment of the portions of the mouldboard, an adjustment of the extension is automatically achieved in such a way that the total guiding surface for a slice of soil corresponds with the amount of soil that has to be displaced by the mouldboard.

The U.S. patent 4 319 645 relates to a plough having at least one plough body provided with a mouldboard that is pivotable as a whole about a disc and socket pivot point (51, 52) which is located near the leading side of the plough share.

The U.S. patent 2 079 531 concerns a plough provided with a plough body having a mouldboard that at its rear side is provided with an auxiliary mouldboard that can be brought into a number of positions with respect to the mouldboard which itself has a fixed position.

The U.S. patent 2 326 097 relates to a plough having at least one plough body with a mouldboard having two portions which, with respect to the direction of travel of the plough, are disposed one behind the other and are pivotable with respect to each other. An extension of the mouldboard is not disclosed.

The invention will now be described by way of example in greater detail with reference to an embodiment shown in the accompanying drawings.

Figure 1 is a plan view of a plough having a construction according to the invention.

Figure 2 illustrates on an enlarged scale a side elevational view of a plough body having a construction according to the invention.

Figure 3 is a view taken in the direction of the arrow III in Figure 2.

Figure 4 illustrates on an enlarged scale a plan view of the foremost portion of the plough shown in Figure 1.

Figure 5 illustrates on an enlarged scale a view taken in the direction of the line V—V in Figure 4, whilst

Figure 6 is a view along the line VI—VI in Figure 4.

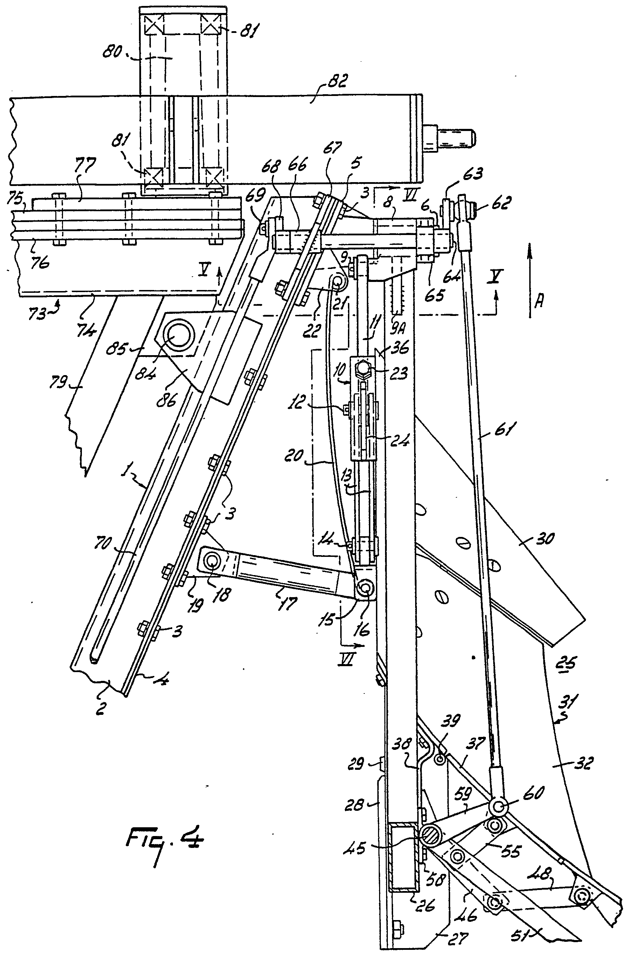

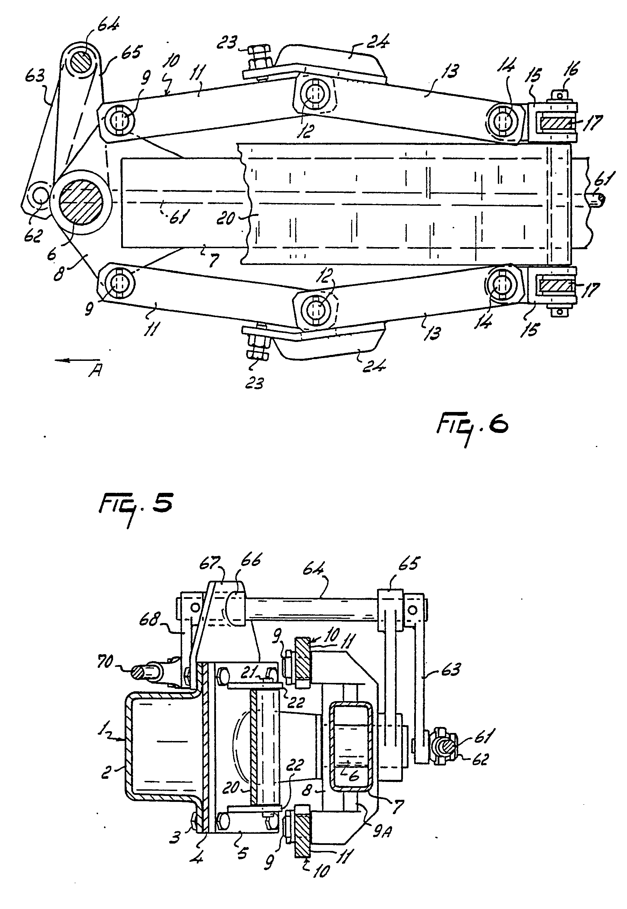

The arrangement shown in the Figures is a soil tilling machine, more specifically a reversible plough, comprising a main frame beam 1 which is inclined at an angle to the direction of operative travel A, which beam is located at least substantially horizontally. The main frame beam 1 has a U-shaped portion 2, which is made from plate material and is situated such that the legs of the U extend at least substantially in the horizontal direction. At the ends the legs are partially bent through a square angle and bolted by means of bolts 3 to an upwardly extending plate 4 (Figures 4 and 5).

Plate-shaped supports 5 are fastened equidistantly from each other to the main frame beam 1. As will be apparent from Figure 4, the foremost support 5 is disposed at the front end of the main frame beam 1, whilst the rear support is disposed with some spacing before the end of the main frame beam 1.

An at least substantially horizontal shaft 6, which extends transversely of the direction of operative travel A is bolted to each of the plate-shaped supports 5 by means of the bolts 3 against the plate 4 of the main frame beam 1 (Figure 5). At some distance from the plate-shaped support 5 a carrier 7 is pivotably arranged on the shaft 6. The carrier 7 extends rearwardly and at least substantially parallel with the direction of operative travel A and, during normal operation, is in at least substantially horizontal position. The carrier 7 which, as can be seen from Figure 5, is hollow and has a rectangular cross-section, is fastened in the region of the shaft 6 to a support 8 which is also secured at its upper and lower sides by means of a bracing plate 9A (Figure 4). At its upper and lower sides the support 8 has a stud 9 which extends in the direction of the main frame beam 1 and is arranged parallel with the shaft 6.

Around each of the studs 9 a rod 10 is provided freely rotatable, which rod extends mainly parallel with the carrier 7 (Figure 6). Each of the rods 10 has a foremost strip-shaped portion 11 which near the centre of the rod is arranged hingeably between two strips of a portion 13 by means of a pin 12, which extends parallel to the studs 9. Each portion 3 is swivably connected by means of its near end with the aid of a pin 14, which also extends at least substantially parallel with the stud 9, to a furcate portion 15, which is disposed between the strip of

2

the portion 13 by means of the pin 14 and a lug. By means of a common shaft 16, which extends at least substantially in the vertical direction, the furcate portions 15 are rotatably disposed on an arm 17. The arm 17 is fastened by means of its other end via a furcate portion and a pin 18, which extends at least substantially in the vertical direction, to a lug 19, which is bolted to the plate 4 of the main frame beam 1 by means of the bolts 3. Between the furcate portions 15, around the shaft 16, one end of a leaf spring 20 is folded, the widest side extending upwardly, and which with its other end is provided around an at least substantially vertical shaft 21, which is disposed between lugs 22 on a support 5. The leaf spring 20, which is pretensioned, tries to keep the portions of the rods 10 and, consequently, the carrier 7 in a position as shown in Figure 6. In this position a stop 23 constituted by an adjustable bolt and disposed on the portion 13 bears against the portion 11 of a rod 10 by means of a support 24 on the portion 13.

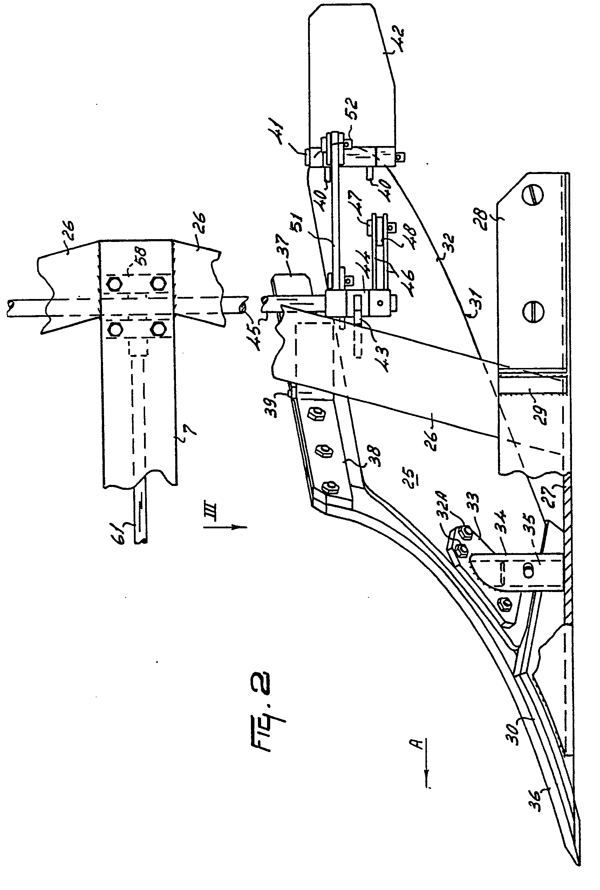

The rods 10 and the spring 20 constitute an overload protection mechanism which keeps the carrier 7, on which two plough bodies 25 are provided one above the other, in a neutral position, swivelling of the carrier 7 around the shaft 6 being counteracted by the springs 20 and the rods 10 both being submitted to a tensile load. At its ends, each support 7 includes a downwardly inclined and forwardly extending or upwardly inclined and forwardly extending, respectively, straight arm 26, which at the end remote from the support 7 carries the plough body 25 (Figure 2). Each plough body 25 includes a support 27 which extends in the direction of operative travel A of the plough and is constituted by an angle iron. The angle iron is provided such that one side is located against the exterior side of the arm 26 and the bottom side bears on the lower end of the said arm. The support 27 serves at the same time as a landside and to that purpose is provided at its rear side with a wearing plate 28 in front of which a shield strip 29 is provided which has for its object to prevent the material from tucking up.

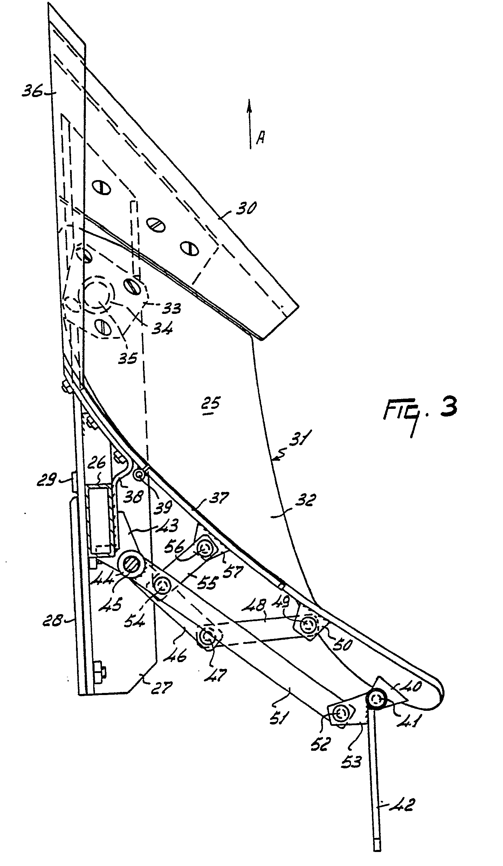

Both the raised edge and the horizontal edge of the support 27 are bevelled at their front ends, in such a way that this creates a fastening feature for a share 30, whose width decreases in the direction from the connection to the support to its end remote from the angle iron (Figure 3) and whose front extends rearwardly at an angle of ± 50° relative to the direction of operative travel A. A mouldboard 31 is contiguous to the share 30. The mouldboard 31 has a lower portion 32 which at its end facing the support 27 is provided at the rear with a plate 33, which is fastened by means of bolts 32A. The plate 33 is provided on the upper side of a bushing 34, which bushing is freely rotatable around a shaft 35 fastened to the horizontal leg of the angle-iron support 27 and extends at least substantially vertically. Above the rearwardly extending leg of the angle-iron support 27 a strip is disposed which, in a plan view, extends at least substantially straight and constitutes a soil crusher 36. The said strip slightly tapers from the front to the rear. At its front end located before the share 30, the soil crusher 36 has a cutting edge and, in a side view (Figure 3) follows the variation of the foremost upright side of the share and the mouldboard portion 32.

The top end of the soil crusher 36 extends to above the upper side of the mouldboard portion 32. The soil crusher 36 also constitutes a shield, behind which shield the mouldboard portion 32 is swivable by means of the bush 34 around the shaft 35 by means of an adjusting arrangement to be further described hereinafter. An upper portion 37 of the mouldboard 31, which portion extends at least substantially parallel with the upper edge of the mouldboard portion 32 and is fastened by means of a support 38 to the soil crusher 36 and to the support 26, connects up with the upper side of the soil crusher 36.

The upper mouldboard portion 37 includes a portion which is contiguous to the soil crusher 36 and by means of an at least substantially vertically positioned hinge pin 39 is connected to a portion having a length of approximately twice the length of the first-mentioned portion. In a plan view, the mouldboard portion 37 extends through apppoximately two-thirds of the length of the upper side of the mouldboard portion 32.

An extension 42 for the mouldboard 31 is provided at the free end of the mouldboard portion 32 by means of supports 40 and a shaft 41 which extends in the upward, preferably vertical, direction. As will be obvious from Figure 2, the extension 42 is predominantly rectangular, tapering somewhat to the free end and having bevelled corners.

For the purpose of readjusting the portions 32 and 37 and the extension 42 constituting the mouldboard 31, an adjusting mechanism located predominantly in the region of the upper side of the mouldboard portion 32 and provided at the rear side of the arm 26 is provided for each plough body 25. To this end, the rear side of the arm 26 is provided with a lug 43. An upwardly, preferably vertically extending shaft 45 is supported in the lug 43 by means of a bushing 44. Under the bushing 44 an arm 46 which extends in an at least horizontal direction and is formed by two superjacent strips is disposed around the shaft 45. The arm 46 is swivably connected by means of its other end via a stud 47, which extends in an at least substantially vertical direction, to an arm 48 disposed between the strips. The arm 48 has its other end swivably arranged between two lugs 50 at the rear of the bottom mouldboard portion 32, by means of an upwardly, preferably vertically extending stud 49. Above the bushing 44, on the shaft 45, an arm 51 is disposed which by means of its other end is disposed capable of swivelling by means of an upwardly extending, at least substantially vertically located pin 52 between two lugs 53, which are fastened to the rear of the extension near the shaft 41 around which the extension 42 is swivable (Figure 3).

An intermediate arm 55 is disposed, capable of swivelling on the arm 51, at some distance from the shaft 45 by means of an upwardly, preferably vertically extending pin 54. By means of a pin 56, which also extends at least substantially in the vertical direction, the intermediate arm 55 is fastened capable of swivelling to a lug 57 located at the rear side of the swivable portion of the upper portion 37 of the mouldboard 32. The shaft 45 which constitutes a common shaft for the adjusting mechanism of a pair of plough bodies 25 is supported at that side of the carrier 7 which is remote from the main frame beam 1, by means of a bearing 58 (Figures 2 and 4). In the region of the bearing 58 the shaft 45 has an arm 59 which extends from the carrier 7 and is in an at least substantially horizontal position. By means of an at least substantially vertical pin 60 the arm 59 is swivably connected to a rod 61, which extends in the forward direction along the carrier 7. By means of a pin 62 which extends parallel with the shaft 6, the front end of the rod 61 is hingeably connected to an upwardly extending lever 63.

At the upper side the lever 63 is fastened to one end of a shaft 64. The shaft 64 is positioned parallel or substantially parallel with the shafts 9 and is supported on the shaft 6 by means of an arm 65. Near its other end, the shaft 64 is supported in a bushing 66 which constitutes a passage for an upwardly extending lug 67 which constitutes a passage for an upwardly extending lug 67 which is bolted by means of the bolts 3 to those ends of the U-shaped portion 2 of the main frame beam 1 remote from the plate 5. The relevant end of the shaft 64 has an arm 68 which extends downwardly and is connected via a pin 69 which extends parallel with the shafts 6 and 64, to a track rod 70 extending along the upper side of the main frame beam 1. The track rod 70 is connected between the second and third pairs of plough bodies to a hydraulic adjusting cylinder 71, which can be connected to the hydraulic circuit of the tractor via ducts, not further shown, and is operable from the tractor.

The plough has a frame 72 which is hitchable to a tractor. The frame 72 includes a frame portion constituted by an, in plan view, triangular frame. The frame includes a transverse beam 73 which is located at least substantially horizontally and extends at least substantially perpendicularly to the direction of operative travel A. The transverse beam 73 comprises a plate-material, U-shaped portion 74, whose legs extend forwardly and are bent through right angles at the ends (Figure 4). The bent portions of the legs are provided capable of sliding by means of an upwardly directed plate which is movable along a plate 75 and strips 76 fastened to the upper and lower sides of this plate. By means of bolts the strips 76 and the plate 75 are bolted to an upwardly directed plate 77 located at the end of the transverse beam, facing the main frame beam. The other end of the transverse beam 73 has at its rear side a beam 78 extending in the direction of operative travel A. The rear end of the beam 78 is connected by means of a connecting beam 79 to a point at the rear of the transverse beam 73, located near the other end. The plate 77 located at the front side of the transverse beam 73 is provided near its rear end, considered in the direction of operative travel A, with a horizontal shaft 80, which shaft extends in the direction of operative travel A and is rotatably supported in bearings 81 fastened to a trestle 82 which comprises a three-point connection for linkage to the three-point linking arrangement of a tractor (Figure 4). An adjusting cylinder 83 which extends in the longitudinal direction of the beam is arranged in the transverse beam 73. The adjusting cylinder 83 is operable from the tractor and has one end connected capable of hinging to a support at the rear side of the plate 75. The other end of the adjusting cylinder 83 is disposed on a support located within the transverse beam 73. By means of ducts, not further shown, the adjusting cylinder 83 can be connected to the hydraulic circuit of a tractor.

In two points which are located one behind the other, the main frame beam 1 is hingeably connected to the frame 72. The foremost hinge point is formed by a hinge pin 84 with the aid of which a lug 85 is disposed near the front end of the connecting beam 79 between two lugs 86, which are located one above the other on the main frame beam 1. The second hinge point is located just before the centre of the main frame beam 1 and is constituted by a hinge pin 87 which connects a lug 88 on the main frame beam to a connecting arm 89. By means of a shaft 90, the connecting arm 89 is hingeably provided between the ends of an arm 91, more specifically before the rear end at 1/5 of the length of the arm 91. The rear end of the arm 91 is swivably fastened by means of a shaft 92 to the upper side of the beam 78 in the region of the rear end of this beam. The front end of the arm 91 is hingeably connected by means of a shaft 93 to a bushing in which a threaded spindle 94 is rotatable. The threaded spindle 94 has one end disposed swivably between lugs 95 which are located one above the other and are disposed at the rear side of the transverse beam 73. With the aid of the shaft 80 the plough which, as mentioned in the foregoing, is a reversible plough can be adjusted to two working positions by means of a known reversing mechanism, not further shown, in which working positions the plough bodies 25 of the respective pairs are alternately operative. The rear end of the main frame beam 1 is provided with a support 96 which has a shaft which extends transversely of the direction of operative travel A and around which an arm 97 is swivable, which in a working position of the plough is directed at a downward angle and to the rear and bears a groundwheel 98, all this such that the groundwheel can assume two positions in which this groundwheel contacts the ground during the above-mentioned working positions of the plough.

The afore described plough operates as follows.

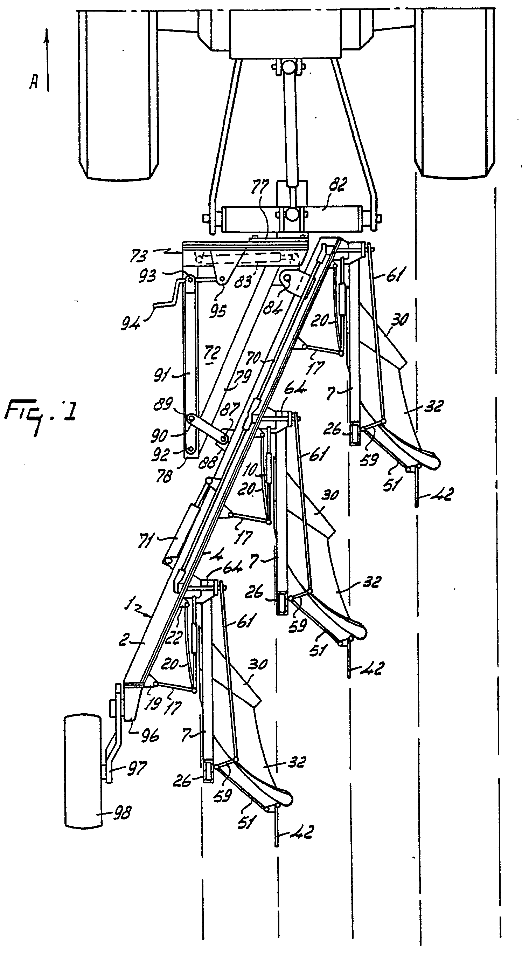

During operation the plough is conneccted to the arms of the three-point lifting arrangement of the tractor by means of the coupling portion comprising the trestle 82 and the plate 75 and, if it assumes a position as illustrated in Figure 1, the plough can be moved in a direction as indicated by arrow A. Then the furrow slices shown in the Figure are turned over to the right by the operative plough bodies 25. In the working position shown, the lower arms of the lever arrangement are in a position in which they are substantially symmetrical relative to a vertical plane in the direction of operative travel A and through a point in the centre of the rear axle of the tractor. The point of intersection of the extension of the relevant arms, which constitutes the ideal drawing point, is then also located substantially in this plane, as is also the point at which the tractive force of the plough acts. The resistance line interconnecting the two points then extends through the centre of the rear axle, so that the tractor is controllable to the maximum extent.

If, from the working position shown in Figure 1, the frame 72 with the main frame beam 1 and the pairs of plough bodies 25 connected thereto are moved to the right by means of the hydraulical adjusting cylinder 83 relative to the direction of operative travel A and the coupling portion connected to the tractor, the main frame beam 1 is moved such thanks to the hinging connection between the main frame beam 1 and the frame 72, which hinging connection includes the hinge points located in succession and formed by the at least substantially vertical shafts 84 and 84, relative to the frame 72 and relative to the direction of operative travel A, that the resistance line is moved in like measure to the left, causing this resistance line to continue to extend at least substantially through the centre of the tractor rear axle. When the frame is moved to the right, the arm 91 moves outwards, the hinge point formed by the shaft 87 being moved to the left with the aid of the connecting arm 89, as a result of which the main frame beam 1 swivels to the left around the hinge point formed by the shaft 84, the intended movement of the resistance line thus being obtained. The above-mentioned displacement is usually effected to obtain an appropriate adaption of the position of the foremost plough body to the track width of the tractor. At a maximum displacement to the right of ± 40 cms the plough is adjustable to a position in which the foremost plough body 25 is placed behind the tractor wheel, that is to say in the open furrow. Then the plough is only loaded by means of the reaction forces acting on two plough bodies. In this case the point at which the tractive force acts becomes located between the two plough bodies. Also then when the frame 72 is moved, the main frame beam 1 is so displaced relative to the frame that the resistance line extends at least substantially through the centre of the rear axle of the tractor. Slight corrections on the variation of the resistance line can be obtained by rotating the threaded spindle 94, which causes the arm 91 to swivel around the hinge pin 92 and a slight readjustment of the main frame beam 1 is obtained with the aid of the connecting arm 89.

As has already been mentioned in the foregoing, during operation the carrier 7 for the plough bodies 25 is kept in an at least substantially horizontal working position by means of the rods 10 which are acted upon by the spring 20 and are subjected to a tensile load.

If during operation the operative plough body 25 hits an obstacle the carrier 7 and, consequently, the plough body 25 can deflect upwards around the shaft 6 to prevent damage. In this situation the portions 11 and 13 of the upper rod 10 are bent upwardly around the pin 12 against the action of the spring 20, so that a tensile load is only exerted on the lower rod 10 and the plough body can get loose from the obstacle whereafter it can quickly return to its original working position, the portions of the upper rod returning to their original position under the action of the spring 20.

During travel of the plough an advantageous cutting of the furrow slice and a flow of this furrow slice along the share 30 on the mouldboard 31 is obtained by means of the soil crusher member 36 located at the front side of each plough body 25. The mouldboard portions 32 and 37 may then be caused to assume a position illustrated in Figure 3, the extension assuming the substantially inoperative position, shown in the Figure, parallel with the direction of operative travel A. How-ever, the position of the mouldboard portions can be changed by rearwardly swivelling the mouldboard portions for each plough body from the position shown around the shafts 35 and 39, using the adjusting cylinder 71, the track rod 70 and the adjusting mechanisms described in the foregoing. This may, for example, be desired when heavy soil is ploughed or if a higher speed of ploughing is required. When the respective mouldboard portions are moved to the rear, the extension 42 starts to advance from the position shown, as a result of which this extension will gradually participate in guiding a furrow slice. When the mouldboard portions are swivelled rearwardly to their maximum extent, the extension arrives completely in the extension of the mouldboard plane, causing this plane to be increased to its maximum, for example, when the heaviest types of soil are ploughed. By readjusting the upper mouldboard portion 37 it is also possible to influence reversing of the cut-out furrow slice. Since the shaft 35 for swivelling the lower mouldboard portion 32 is directly located behind the share 30, the position of the mouldboard portion does substantially not change when it is swivelled around the shaft.

**Claims**

1. A plough comprising a frame and at least one plough body (25) connected to this frame, the plough body (25) including a mouldboard (31) comprising at least two portions (32, 37) that are arranged one above the other and pivotably relative to each other, characterized in that the lower portion (32) of the mouldboard (31) has an extension (42) arranged adjustably around an upwardly extending shaft (41) and, for the object of adjusting the respective portions (32, 37) of the mouldboard (31), an adjusting mechanism is provided which includes an upwardly extending shaft (45) connected to a plough body carrying arm (26) and in that the adjusting mechanism includes a first arm (51) which is disposed on the shaft (45) and is swivelably connected to the said extension (42) and that the shaft (45) also includes another arm (46) which is hingedly connected to the swivelable lower portion (32) of the mouldboard (31), a third arm (55) for adjusting the upper mouldboard portion (37) being connected with the first arm (51), all this such that, when the mouldboard portions (32, 37) are swivelled in one direction, the extension (42) is swivelled in the opposite direction.

2. A plough as claimed in claim 1, characterized in that the lower mouldboard portion (32) is adjustable around an upwardly extending shaft (35) which is located near the plough share (30).

3. A plough as claimed in claim 2, characterized in that the shaft (35) is disposed on a support (27) located at the bottom side of the plough, which support (27) is formed by an angle iron, the rearside of the support at the same time acting as a landside.

4. A plough as claimed in any one of the claims 1—3, characterized in that the upper portion (37) of the mouldboard (31) is pivotable about a hinge pin (39) located near the said plough body carrying arm (26).

5. A plough as claimed in any one of the preceding claims, characterized in that two plough bodies (25) are connected pivotably against the action of a spring (20) around a common, at least substantially horizontal shaft (6).

6. A plough as claimed in claim 5, characterized in that two rods (10) are present, arranged one above the other, which are hingeably connected to both the frame of the plough and to a support for the plough body and a compression spring (20) is provided between the frame and the hinging connection to the support.

7. A plough as claimed in claim 6, characterized in that the spring (20) is a spring-loaded leaf spring, all this such that the two rods (10) are subjected to a tensile load and each of the rods (10) has near its centre a bending point which has a horizontal axis (12) which extends at least substantially transversely of the direction of operative travel and in that a stop (23) which prevents the rod portions from moving too far inwards is provided near the bending point.

8. A plough as claimed in any one of the claims 6 or 7, characterized in that the front ends of the rods (10) are capable of hinging in the region of the transverse shaft (6) around which a support (7) for a plough body (25), which support (7) extends in the direction of operative travel, is pivotably disposed.

## Patentansprüche

1. Pflug mit einem Rahmen und wenigstens einem mit diesem Rahmen verbundenen Pflugkörper (25) mit einem Streichblech (31), das wenigstens zwei Teile (32, 37) aufweist, die übereinander angeordnet und relativ zueinander verschwenkbar sind, dadurch gekennzeichnet, daß der untere Teil (32) des Streichbleches (31) einen Fortsatz (42) aufweist, der um eine nach oben gerichtete Achse (41) verstellbar angeordnet ist, daß zum Verstellen der jeweiligen Teile (32, 37) des Streichbleches (31) ein Verstellmechanismus vorgesehen ist, der eine mit einem Pflugkörper-Tragarm (26) verbundene, nach oben gerichtete Achse (45) enthält, und daß der Verstellmechanismus einen ersten Arm (51) aufweist, der auf der Achse (45) angeordnet und mit dem Fortsatz (42) schwenkbar verbunden ist, und daß die Achse (45) außerdem einen weiteren Arm (46) aufweist, der mit dem schwenkbaren unteren Teil (32) des Streichbleches (31) gelenkig verbunden ist, wobei ein dritter Arm (55) zum Einstellen des oberen Streichblechteiles (37) mit dem ersten Arm (51) verbunden ist, derart, daß beim Verschwenken der Streichblechteile (32, 37) in einer Richtung der Fortsatz (42) in der entgegengesetzten Richtung verschwenkt wird.

2. Pflug nach Anspruch 1, dadurch gekennzeichnet, daß der untere Streichblechteil (32) um eine in der Nähe der Pflugschar (30) befindliche, nach oben gerichtete Achse (35) einstellbar ist.

3. Pflug nach Anspruch 2, dadurch gekennzeichnet, daß die Achse (35) auf einem an der Unterseite des Pfluges befindlichen Träger (27) angeordnet ist, der durch ein Winkeleisen gebildet ist, wobei die Rückseite des Trägers zugleich als Anlage wirkt.

4. Pflug nach einem der Ansprüche 1 bis 3, dadurch gekennzeichnet, daß der obere Teil (27) des Streichbleches (31) um einen Schwenkzapfen (39) verschwenkbar ist, der sich in der Nähe des Pflugkörper-Tragarmes (26) befindet.

5. Pflug nach einem der Ansprüche 1 bis 4, dadurch gekennzeichnet, daß zwei Pflugkörper (25) gegen die Kraft einer Feder (20) um eine gemeinsame, wenigstens im wesentlichen horizontale Achse (6) schwenkbar verbunden sind.

6. Pflug nach Anspruch 5, dadurch gekennzeichnet, daß zwei übereinander angeordnete Stangen (10) vorhanden sind, die sowohl mit dem Rahmen des Pfluges als auch mit einem Träger für den Pflugkörper gelenkig verbunden sind, und daß zwischen dem Rahmen und der Gelenkverbindung mit dem Träger eine Druckfeder (20) vorgesehen ist.

7. Pflug nach Anspruch 6, dadurch gekennzeichnet, daß die Feder (20) eine vorgespannte Blattfeder ist, derart, daß die beiden Stangen (10) zugbelastet sind und jede der Stangen (10) in der Nähe ihrer Mitte eine Biegestelle mit horizontaler Achse (12) aufweist, die sich wenigstens im wesentlichen quer zu der Arbeitsbewegungsrichtung erstreckt, und daß in der Nähe der Biegestelle ein Anschlag (23) vorgesehen ist, der die Stangenteile an einer zu weit nach innen gehenden Bewegung hindert.

8. Pflug nach Anspruch 6 oder 7, dadurch gekennzeichnet, daß die vorderen Enden der Stangen (10) im Bereich der Querachse (6) gelenkig schwenkbar sind, und daß ein sich in Arbeitsbewegungsrichtung erstreckender Träger (7) für einen Pflugkörper (25) um die Querachse (6) schwenkbar angeordnet ist.

## Revendications

1. Charrue comportant un chassis et au moins un corps de charrue (25) relié à ce chassis, le corps de charrue (25) comportant un versoir (31) comprenant au moins deux parties (32, 37) disposées l'une au dessus de l'autre et articulées l'une sur l'autre, caractérisée en ce que la partie inférieure (32) du versoir (31) a un prolongement (42) monté de manière réglable autour d'un arbre (41) s'étendant vers le haut, et en ce que, pour le réglage des parties respectives (32, 37) du versoir, il est prévu un mécanisme de réglage comprenant un arbre (45) s'étendant vers le haut, relié à un bras (26) portant le corps de charrue, et en ce que le mécanisme de réglage comporte un premier bras (51) qui est disposé sur l'arbre (45) et est relié de manière pivotante audit prolongement (42), et en ce que l'arbre (45) comporte en outre un autre bras (46) qui est articulé à la manière d'une charnière avec le partie inférieure pivotante (32) du versoir (31), un troisième bras (55) pour le réglage de la partie supérieure (37) du versoir étant relié au premier bras (51), le tout de telle manière que, quand on fait pivoter les parties (32, 37) du versoir dans un sens, le prolongement (42) pivote dans l'autre sens.

2. Charrue selon la revendication 1, caractérisée en ce que la partie inférieure (32) du versoir est réglable autour d'un arbre (35) s'étendant vers le haut, situé près du soc (30) de la charrue.

3. Charrue selon la revendication 2, caractérisée en ce que l'arbre (35) est disposé sur un support (27) situé sur le côté du fond de la charrue, lequel support (27) est formé par un fer cornière, le côté arrière du support agissant en même temps comme un patin d'appui dans le sillon.

4. Charrue selon l'une quelconque des revendications 1 à 3, caractérisée en ce que la partie supérieure (37) du versoir (31) pivote autour d'un pivot de charnière (39) situé près dudit bras (26) portant le corps de charrue.

5. Charrue selon l'une quelconque des revendications précédentes, caractérisée en ce que deux corps de charrue (25) sont reliés de manière pivotante en s'opposant à l'action d'un ressort (20) autour d'un axe commun (6) qui est tout au moins pratiquement horizontal.

6. Charrue selon la revendication 5, caractérisée en ce que deux tiges (10) sont présentes, disposées l'une au dessus de l'autre, en étant reliées par une articulation à la manière d'une charnière, aussi bien au chassis de la charrue qu'à un support pour le corps de charrue, un ressort de compression (20) étant prévu entre le chassis et l'articulation avec le support.

7. Charrue selon la revendication 6, caractérisée en ce que le ressort (20) est un ressort à lame précontraint, tout ceci de telle sorte que les deux tiges (10) sont soumises à une charge de tension et que chacune des tiges (10) a près de son centre un point de flexion ayant un axe horizontal (12) qui s'étend tout au moins sensiblement transversalement au sens de marche pour le travail, et en ce qu'il est prévu près du point de flexion une butée (23) qui empêche les parties des tiges de se déplacer trop loin vers l'intérieur.

8. Charrue telle que revendiquée dans l'une quelconque des revendications 6 ou 7, caractérisée en ce que les extrémités antérieures des tiges (10) sont capables d'être articulées dans la région de l'arbre transversal (6) autour duquel est disposé de manière pivotante un support (7) pour un corps de charrue (25), lequel support (7) s'étend dans le sens de marche pour le travail.

Fig. 1

FIG. 2

EP 0 196 729 B1

FIG. 3

3

FIG. 4

4

FIG. 6

FIG. 5